# FASCICULE DE BREVET EUROPEEN

(11) **EP 0 477 048 B1**
(45) Date de publication et mention de la délivrance du brevet: **10.07.1996**
(21) Numéro de dépôt: 91402268.6
(22) Date de dépôt: 19.08.1991
(51) Int. Cl.: C07F 9/165, C10M 137/10, C07F 9/09, C07F 9/14, C07F 9/141

(54) **Nouveaux composés phosphosoufrés et leur utilisation comme additifs pour huile lubrifiante**
Phosphorschwefelverbindungen und ihre Verwendung als Schmieröladditive
Compounds containing phosphorus and sulfur and their use as additives for lubricant oil

(30) Priorité: 24.08.1990 FR 9010702; 27.12.1990 FR 9016530
(43) Date de publication de la demande: 25.03.1992
(73) Titulaire: INSTITUT FRANCAIS DU PETROLE, F-92506 Rueil Malmaison Cédex (FR)
(72) Inventeur: Born, Maurice, F-92000 Nanterre (FR); Aberkane, Ourida, F-57290 Fameck (FR); Mieloszinski, Jean-Luc, F-57158 Montigny (FR); Paquer, Daniel, F-54500 Vandoeuvre (FR); Parc, Guy, F-92500 Rueil Malmaison (FR)

(56) Documents cités:
- EP-A- 0 461 976
- FR-A- 982 719
- FR-A- 1 321 821
- FR-A- 2 342 983
- US-A- 2 750 342
- US-A- 3 591 475
- US-A- 3 944 495

## Description

La présente invention concerne de nouveaux composés phosphosoufrés (c'est-à-dire soufrés et phosphorés) particuliers et leur utilisation comme additifs pétroliers, notamment comme additifs antioxydants, antiusure, extrême-pression et anticorrosifs pour huiles lubrifiantes.

L'utilisation d'additifs antiusure et extrême-pression notamment dans les huiles moteurs, les fluides de transmission, les fluides hydrauliques se pratique depuis plusieurs décennies. De nombreux types d'additifs ont ainsi été développés et plusieurs d'entre eux ont permis de réduire très sensiblement la détérioration des mécanismes et ont, de ce fait, permis de prolonger leur durée de vie.

Parmi les nombreux additifs antiusure et extrême-pression qui ont été étudiés, les dialkyl- et diaryl-dithiophosphates et les dialkyl-dithiocarbamates métalliques (ceux de zinc notamment), les alkylthiophosphates, le tricrésylphosphate, , le didodécylphosphate, les terpènes sulfurés, l'huile de spermacéti soufrée et divers composés chlorés se sont montrés les plus actifs et ont connu un développement industriel important. Certains d'entre eux sont décrits dans les brevets US-A-2 364 283, 2 364 284, 2 365 938, 2 410 650, 2 438 876, 3 190 833. Il s'agit généralement de composés renfermant des hétéroatomes tels que le soufre et le phosphore, soit seuls (par exemple le tricrésylphosphate, les terpènes soufrés, les dithiocarbamates), soit en association (par exemple des dialkyldithiophosphates métalliques, des alkylthiophosphates). On peut encore citer des brevets FR-A-982 719 et 1 321 821 et les brevets US 2 750 342 et 3 944 495.

Les composés phosphosoufrés utilisés précédemment présentent des quantités relatives de soufre et de phosphore qui sont imposées par la stoéchiométrie des réactions lors de leur synthèse et qui leur confèrent notamment des propriétés antiusure et extrême-pression relatives sur lesquelles l'homme de l'art ne peut exercer aucune modification.

Il a été maintenant découvert de nouveaux composés phosphosoufrés particuliers, utilisables notamment comme additifs de lubrification, préparés de préférence par réaction de réactifs phosphorés conventionnels avec des alcools (poly)sulfurés ce qui permet de pouvoir modifier à volonté les performances relatives antiusure et extrême-pression desdits composés phosphosoufrés.

Les composés phosphosoufrés selon la présente invention répondent à la formule générale (A) :

(((R¹-Sₓ- (CH₂)ₙ-O)̵ₚ P(X)-Yₜ-)_{q}Zₘ

dans laquelle :
R¹ représente un groupement alkyle (par exemple méthyle, éthyle tertiobutyle) ou alkényle (par exemple CH₂=C(CH₃)-CH₂-), fonctionnalisé ou non, renfermant de 1 à 30 atomes de carbone ; ⁿ est un nombre de 1 à 30;
X représente un atome d'oxygène ou un atome de soufre; Y représente un atome d'oxygène, un atome de soufre ou une chaîne hydrocarbonée oxygénée ou soufrée; Z représente un atome d'hydrogène, un atome de chlore, un métal choisi par exemple dans le groupe formé par le sodium, le zinc, le cuivre, le molybdène, le plomb, l'antimoine et le cadmium, un dérivé oxygéné ou soufré du molybdène ou un groupement R⁶, alkyle ou alkényle, fonctionnalisé ou non, renfermant de 1 à 30 atomes de carbone ;
x est un nombre égal ou supérieur à 2, de préférence égal à 2 ou 3;
p est égal à 2 ou 3 ;
t est égal à O ou (si t=0, alors il n'y a pas de groupement Y dans la formule (A) ci-dessus);
m est égal à 0 ou 1 (si m=0, alors il n'y a pas de groupe Z dans la formula (A) ci-dessus);
q est un nombre égal à la valence de Z si Z est un métal ou un nombre égal à 1 ou 2.

Dans la définition de R¹ et R⁶, on entend par groupement fonctionnalisé un groupement renfermant au moins un hétéroatome tel que, par exemple, le chlore ou le soufre, ou au moins une fonction chimique choisie par exemple parmi les fonctions acide carboxylique, aldéhyde, cétone, nitrile, hydroxyle et époxyde, plusieurs de ces fonctions pouvant être présentes dans le même groupement R¹ et R⁶.

Les différents types de composés phosphosoufrés qui répondent à la formule (A) ci-dessus sont plus particulièrement les suivants :
- les acides dialkyldithiophosphoriques et dialkényldithiophosphoriques polysulfurés de formule générale (II) :

   (R¹-Sₓ-(CH₂)ₙ-O-)₂ P(S)-SH

   c'est-à-dire de formule générale(A) dans laquelle X=S, Y=S, Z=H, p=2, t=1, q=1 et m=1; à titre d'exemples de composés de formule (II), on peut citer ceux pour lesquels :
   . R¹= tertiobutyle, x=2, n=2, 3, 4, 5 ou 6 et de préférence n=2, 3 ou 6 ;
   . R¹= CH₂=C(CH₃)-CH₂-, x=2, n=2, 3, 4, 5 ou 6 et de préférence n=3 ;
- les sels métalliques polysulfurés de formule générale (IV) :

   ((R¹-Sₓ-(CH₂)ₙ-O-)₂ P(S)-S-)_{q}Z

   dans laquelle Z est un métal et q est un nombre égal à la valence de Z; c'est-à-dire de formule générale (A) dans laquelle X=S, Y=S, Z=un métal (par exemple le zinc), p=2, t=1, q=valence de Z et m=1; à titre d'exemples de composés de formule (IV), on peut citer ceux pour lesquels :
   . R = tertiobutyle ou CH₂ = C(CH₃)-CH₂-, x=2, n=2, 3, 4, 5 ou 6, Z=Zn et q=2 ;
- les composés organiques poly sufurés de formule générale (VI) :

   ((R¹-Sₓ-(CH₂)ₙ-O-)₂ P(S)-S-R⁶

   c'est à dire de formule générale (A) dans laquelle X=S, Y=S, Z=R⁶, p=2, t=1, q=1 et m=1 ; à titre d'exemples de composés de formule (VI), on peut citer ceux pour lesquels R¹=tertiobutyle ou CH₂=C(CH₃)-CH₂-, x= 2, n=2, 3, 4, 5 ou 6 et R₆=(CH₃)₃-C-S-(CH₂)₃-CH₂-;
- les acides dialkylphosphoriques et dialkénylphosphoriques polysulfurés et les sels métalliques polysulfurés correspondants de formule générale (VIII) :

   ((R¹-Sₓ-(CH₂)ₙ-O-)₂ P(O)-O-)_{q} Z

   dans laquelle Z=H ou un métal (par exemple le zinc), c'est-à-dire de formule générale (A) dans laquelle X=O, Y=0, Z=H ou un métal, p=2, t=1, q=1 (si Z=H) ou q=valence de Z (si Z est un métal) et m=1 ; on peut citer à titre d'exemples de composés de formule (VII) ceux pour lesquels R¹=tertiobutyle ou CH₂=C(CH₃)-CH₂-, x=2, n=2, 3, 4, 5 ou 6, Z=Zn (et q=2) ou Z=H (et q=1)
- les dialkylchlorophosphates, et dialkénylchlorophosphates polysulfurés de formule générale (X):

   (R¹-Sₓ-(CH₂)ₙ-O-)₂ P(O)-Cl

   c'est-à-dire de formule générale (A) dans laquelle X=O, Z=Cl, y=0, v=0, r=1, p=2, t=0, q=1 et m=1; à titre d'exemples de composés de formule (X), on peut citer ceux pour lesquels R¹=tertiobutyle ou CH₂=C(CH₃)-CH₂-, x=2, n=2, 3, 4, 5 ou 6 et de préférence n=3 ou 6.
- les dialkylchlorothiophosphates et dialkénylchlorothiophosphates poly sulfurés de formule générale (XI):

   (R¹-Sₓ-(CH₂)ₙ-O-)₂ P(S)-Cl

   c'est-à-dire de formule générale (A) dans laquelle X=S, Z=Cl, p=2, t=0, q=1 et m=1; à titre d'exemples de composés de formule (XI), on peut citer ceux pour lesquels R¹=tertiobutyle ou CH₂=C(CH₃)-CH₂-, x=2, n=2, 3, 4, 5 ou 6 et de préférence n= 3 ou 6;
- les trialkylphosphates et trialkénylphosphates polysulfurés de formule générale (XIV) :

   (R¹-Sₓ-(CH₂)ₙ-O-)₃ P(O)

   ,c'est-à-dire de formule générale (A) dans laquelle X=0, p=3, t=0, q=1 et m=0 ; on peut citer à titre d'exemples de composés de formule (XIV) ceux pour lesquels R¹ = tertiobutyle ou CH₂=C(CH₃)-CH₂-, x= 2 et n=2, 3, 4, 5 ou 6 ;
- les trialkylthiophosphates ou trialkénylthiophosphates poly sulfurés de formule générale (XVI) :

   (R¹-Sₓ-(CH₂)ₙ-O-)₃ P(S)

   c'est-à-dire de formule générale (A)dans laquelle X=S, p=3, t=0, q=1 et m=0 ; on peut citer à titre d'exemples de composés de formule (XVI) ceux pour lesquels R¹ =tertiobutyle ou CH₂=C(CH₃)-CH₂-, x= 2 et n=2, 3, 4, 5 ou 6 ; et
- les dialkylphosphonates ou dialkénylphosphonates poly sulfurés de formule générale (XVIII) :

   (R₁-Sₓ-(CH₂)ₙ-O-)₂ P(O)-H

   , c'est-à-dire de formule générale (A) dans laquelle X=O, Z=H, p=2, t=0, q=1 et m=1; on peut citer à titre d'exmples de composés de formule (XVIII) ceux pour lesquels R¹ =tertiobutyle ou CH₂=C(CH₃)-CH₂-, x=2 et n=2, 3, 4, 5 ou 6.

Les composés de l'invention peuvent encore consister en les alcools (poly)sulfurés de formule générale (B) : 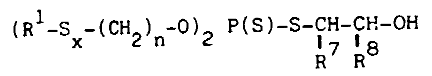 dans laquelle x est un nombre égal ou supérieur à 1; n est un nombre de 1 à 30;
R⁷ et R⁸, identiques ou différents, représentent chacun un atome d'hydrogène ou un radical substantiellement hydrocarboné monovalent de 1 à 30 atomes de carbone, R⁷ et R⁸ pouvant être reliés entre eux pour former une chaîne polyméthylénique ; à titre d'exemples de composés de formule ( B ), on peut citer ceux pour lesquels R¹= tertiobutyle ou CH₂= C(CH₃)-CH₂-, x=1 ou 2, n=2, 3, 4, 5 ou 6, R⁷=H et R⁸ =H ou CH₃ .

Les composés de l'invention sont encore ceux qui répondent à la formule générale (C) : 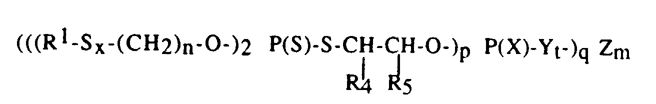 dans laquelle :
R¹ représente un groupement alkyle (par exemple méthyle, éthyle tertiobutyle) ou alkényle (par exemple CH₂=C(CH₃)-CH₂-), fonctionnalisé ou non, renfermant de 1 à 30 atomes de carbone ;
R⁴ et R⁵, identiques ou différents, représentent chacun un atome d'hydrogène ou un radical substantiellement hydrocarboné monovalent de 1 à 30 atomes de carbone, R⁴ et R⁵ pouvant être reliés entre eux pour former une chaîne polyméthylénique ; par exemple, R⁴ = H et R⁵ = H ou CH₃ ;
X représente un atome d'oxygène ou un atome de soufre; Y représente un atome d'oxygène, un atome de soufre ou une chaîne hydrocarbonée oxygénée ou soufrée; Z représente un atome d'hydrogène, un atome de chlore, un atome de soufre, une chaîne polysulfurée, un métal choisi par exemple dans le groupe formé par le sodium, le zinc, le cuivre, le molybdène, le plomb, l'antimoine et le cadmium, un dérivé oxygéné ou soufré du molybdène ou un groupement R⁶, alkyle ou alkényle, fonctionnalisé ou non, renfermant de 1 à 30 atomes de carbone ;
x est un nombre égal ou supérieur à 1, de préférence égal à 1, 2 ou 3;
p est égal à 2 ou 3 ;
t est égal à 0 ou (si t=0, alors il n'y a pas de groupement Y dans la formule (C) ci-dessus;
m est égal à 0 ou 1 (si m=0, alors il n'y a pas de groupe Z dans la formule (C) ci -dessus ;
q est un nombre égal à la valence de Z si Z est un métal ou un nombre égal à 1 ou 2.

Dans la définition de R¹ et R⁶, on entend par groupement fonctionnalisé un groupement renfermant au moins un hétéroatome tel que, par exemple, le chlore ou le soufre, ou au moins une fonction chimique choisie par exemple parmi les fonctions acide carboxylique, aldéhyde, cétone, nitrile, hydroxyle et époxyde, plusieurs de ces fonctions pouvant être présentes dans le même groupement R¹ et R⁶.

Les différents types de composés phosphosoufrés de formule générale (C) sont plus particulièrement les suivants (le terme (poly)sulfuré signifie que le composé est soit monsulfuré (x = 1) soit polysulfuré (x > 1)) :
- les acides dihydrocarbyldithiophosphyldithiophosphoriques (poly) sulfurés et les sels métalliques poly sulfurés correspondants de formule générale (V) : 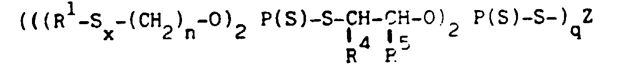 dans laquelle Z=H ou un métal (par exemple le zinc), c'est-à-dire de formule générale (C) dans laquelle X=S, Y=S, Z=H ou un métal, p=2, t=1, q=1 (si Z=H) ou q=valence de Z (si Z est un métal) et m=1; à titre d'exemples de composés de formule (V), on peut citer ceux pour lesquels R¹= tertiobutyle ou CH₂=C(CH₃)-CH₂-, x=1 ou 2, n=2, 3, 4, 5 ou 6, R⁴=H, R⁵=H ou CH₃, Z=Zn (et q=2) ou Z=H (et q=1) ;
- les composés organiques (poly)sulfurés de formule générale (V11) : 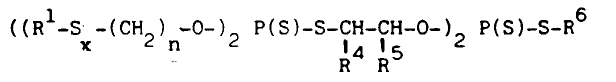 c'est-à-dire de formule générale (C) dans laquelle X=S, Y=S, Z=R⁶, p=2, t=1, q=1 et m=1; à titre d'exemples de composés de formule (VII), on peut citer ceux pour lesquels R=tertiobutyle ou CH₂=C(CH₃)-CH₂-, x=1 ou 2, n=2, 3, 4, 5 ou 6, R⁴ =H, R⁵ H ou CH₃ et R⁶=(CH₃)₃-C-S-(CH₂)₃-CH₂-;
- les acides dihydrocarbyldithiophosphylphosphoriques (poly)sulfurés et les sels métalliques (poly)sulfurés correspondants de formule générale (IX) : 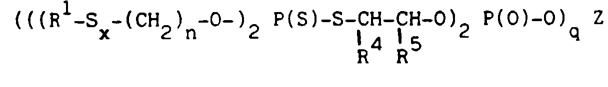 dans laquelle Z=H ou un métal (le zinc par exemple), c'est-à-dire de formule générale (C) dans laquelle X=0, Y=0, Z=H ou un métal, p=2, t=1, q=1 (si Z=H) ou q=valence de Z (si Z est un métal) et m=1 ;
   à titre d'exemples de composés de formule (IX), on peut citer ceux pour lesquels R¹=tertiobutyle ou CH₂ = C(CH₃)-CH₂-, x=1, n=2, 3, 4, 5 ou 6, R⁴=H, R⁵=H ou CH₃, Z=Zn (et q=2) ou Z=H (et q=1) ;
- les composés organiques (poly)sulfurés de formule générale (XII): 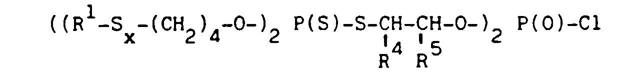 c'est-à-dire de formule (C) ) dans laquelle X=0, Z=Cl, p=2, t=0, q=1 et m=1; ; à titre d'exemples de composés de formule (XII), on peut citer ceux pour lesquels R¹=tertiobutyle ou CH₂=C(CH₃)-CH₂-, x=1 ou 2, n=2, 3, 4, 5 ou 6, R⁴=H et R⁵=H ou CH₃;
- les composés organiques (poly)sulfurés de formule générale (XIII): 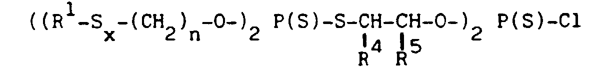 c'est à dire de formule (^{C}) dans laquelle X=S, Z=Cl, p=2, t=0, q=1 et m=1; ; à titre d'exemples de composés de formule (XIII), on peut citer ceux pour lesquels R¹=tertiobutyle ou CH₂=C(CH₃)-CH₂-, x=1 ou 2, n=2, 3, 4, 5 ou 6, R⁴=H et R⁵=H ou CH₃;
- les composés organiques (poly)sulfurés de formule générale (XV) : 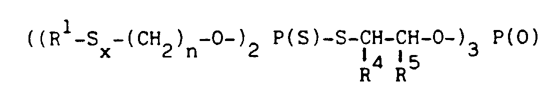 c'est-à-dire de formule (C) dans laquelle X=0, p=3, t=0, q=1 et m=0; à titre d'exemples de composés de formule (XV), on peut citer ceux par lesquels R¹=tertiobutyle ou CH₂=C(CH₃)-CH₂-,X = 1 ou 2, n=2, 3, 4, 5 ou 6, R⁴=H et R⁵=H ou CH₃;
- les composés organiques (poly)sulfurés de formule générale (XVII): 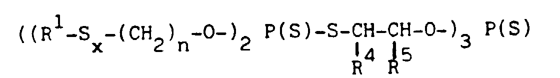 c'est-à-dire de formule (C) dans laquelle X=S, p=3, t=0, q=1 et m=0; à titre d'exemples de composés de formule (XVII) on peut citer ceux pour lesquels R¹=tertiobutyle ou CH₂=C(CH₃)-CH₂,_{X} =1 ou 2, n= 2, 3, 4, 5 ou 6, R⁴=H et R⁵=H ou CH₃; et
- les composés organiques (poly)sulfurés de formule générale (XIX): 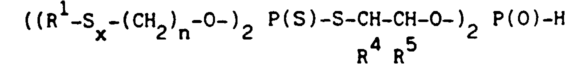 c'est à dire de formule générale (I) dans laquelle X=O, Z=H, p=2, t=0, q=1 et n=1; a titre d'exemples de composés de formule (XIX), on peut citer ceux pour lesquels R¹=tertiobutyle ou CH₂=C(CH₃)-CH₂-, x=1 ou 2, n=2, 3, 4, 5 ou 6, R⁴=H et R⁵=H ou CH₃.

Les composés phosphosoufrés de l'invention sont enfin les composés organiques (poly)sulfurés de formule générale ( D): 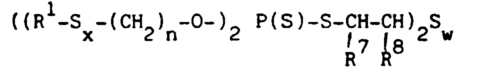 dans laquelle x est un nombre égal ou supérieur à 1 et n est un nombre de 1 à 30, de préférence égal ou supérieur à 3,
R⁷ et R⁸, identiques ou différents, représentent chacun un atome d'hydrogène ou un radical substantiellement hydrocarboné monovalent de 1 à 30 atomes de carbone, R⁷ et R⁸ pouvant être reliés entre eux pour former une chaîne polyméthylénique ;
w étant un nombre égal ou supérieur à 1, à titre d'exemples de composés de formule (D), on peut citer ceux pour lesquels R¹=CH₃, C₂H₅-, (CH₃)₃C- et CH₂=C(CH₃)-CH₂, x=1, 2 ou 3, n=3, 4, 5 ou 6, R⁷=H, R⁸=H ou CH₃ et w = 1, 2, 3 ou 4; et plus précisement les composés ayant les formules suivantes (avec tBu=tertiobutyle):
((tBu-S-(CH₂)₃-O-)₂ P(S)-S-CH₂-CH₂)₂S
((tBU-S-(CH₂)₃-O-)₂ P(S)-S-CH₂-CH₂)₂S₂
((tBU-S-(CH₂)₃-O-)₂ P(S)-S-CH₂-CH₂)₂S₃
((tBU-S₂-(CH₂)₃-O-)₂ P(S)-S-CH₂-CH₂)₂S
((tBU-S₂-(CH₂)₃-O-)₂ P(S)-S-CH₂-CH₂)₂S₂
((tBu-S₂-(CH₂)₃-O-)₂ P(S)-S-CH₂-CH₂)₂S₃

Un autre objet de l'invention est de décrire les alcools polysulfurés de formule

R¹-Sₓ-(CH₂)ₙ-OH

où R1 représente un groupement alkyle ou alkényle, fonctionnalisé ou non, renfermant de 1 à 30 atomes de carbone; n est un nombre de 1 à 30; et x est un nombre égal ou supérieur à 2; à titre d'exemple de ces composés, on peut citer l'alcool polysulfuré de formule (CH₃)₃C-S₂-(CH₂)₃-OH, utilisable comme produit intermédiaire dans la synthèse d'acides dialkyldithiophosphoriques polysulfurés de formule

((CH₃)₃C-S₂-(CH₂)₃-O-)₂ P(S)-SH

Des méthodes de préparation des composés phosphosoufrés selon l'invention sont illustrées dans les exemples.

En raison notamment de leurs très bonnes propriétés antioxydantes, anticorrosives et surtout antiusure et extrême-pression, chaque composé phosphosoufré selon l'invention peut être avantageusement utilisé comme additif pour huile lubrifiante (notamment minérale et/ou synthétique) à une concentration de 0,05 à 5 % en poids.

La présente invention a donc également pour objet une composition lubrifiante comprenant une proportion majeure d'huile lubrifiante et une proportion de 0,05 à 5 % en poids d'au moins un composé phosphosoufré selon la présente invention.

Les exemples suivants illustrent l'invention sans toutefois en limiter la portée.

### EXEMPLE 1 : SYNTHESE D'UN ACIDE DIALKYLDITHIOPHOSPHORIQUE MONOSULFURE (Produit connu)

. Dans une première étape, on introduit 3000 cm³ d'alcool éthylique pur dans un réacteur tricol de 6000 cm³, puis 372 g (9,3 mole) d'hydroxyde de sodium. Après dissolution, on porte le mélange à 50°C et on ajoute progressivement 837,6 g (9,3 mole) de méthyl-2 propanethiol-2. A la fin de l'addition, on maintient la température à 50°C pendant encore 0,5 heure, puis on refroidit à 20°C.

On introduit ensuite progressivement 878,8 g (9,3 mole) de n-chloropropanol ; le mélange est porté au reflux de l'alcool pendant 6 heures, puis il est refroidit à la température ambiante.

Le NaCl formé est éliminé par filtration, et la solution organique est acidifiée par une solution aqueuse d'HCl 2 N. On recueille la phase organique, puis on extrait la phase aqueuse par du dichlorométhane. Les fractions organiques sont réunies, lavées à l'eau, séchées sur Na₂SO₄ anhydre, et le dichlorométhane est éliminé par évaporation sous pression réduite.

La purification du produit effectuée par distillation sous pression réduite (PE = 84°C/1 mmbar) permet d'obtenir 1370 g de produit incolore dont l'analyse élémentaire est la suivante :

| C % Masse | | H % Masse | | S % Masse | |
|---|---|---|---|---|---|
| Trouvé | Théorie | Trouvé | Théorie | Trouvé | Théorie |
| 56,81 | 56,73 | 10,79 | 10,81 | 21,84 | 21,66 |

Par ailleurs, l'analyse RMN ¹³C confirme la structure chimique attendue, à savoir

(CH₃)₃-C-S-(CH₂)₃-OH (alcool monosulfuré)

. Dans une seconde étape, on introduit dans un réacteur tricol de 2000 cm³ 189,6 g (1,28 mole) d'alcool monosulfuré préparé précédemment et 400 cm³ de chloroforme.

On porte le mélange à 60°C, puis on ajoute progressivement 71,12 g (0,32 mole gramme) de P₂S₅; après totale dissolution du P₂S₅, le mélange est conservé pendant une heure suplémentaire à 60°C sous agitation. Après avoir éliminé le chloroforme sous pression réduite, on recueille 240 g de liquide jaune clair dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 43,21 | 43,05 | 7,97 | 7,94 | 32,71 | 32,86 | 8,02 | 7,94 |

L'analyse RMN ¹³C confirme la structure chimique attendue, à savoir :

((CH₃)₃ C-S-(CH₂)₃-O)₂ P(S)-SH

### EXEMPLE 2 : SYNTHESE D'UN DIALKYLDITHIOPHOSPHATE DE ZINC MONOSULFURE (Produit connu)

Une partie de l'acide dialkyldithiophosphorique sufuré obtenu précédemment (30 g, soit 0,077 mole) est transformée en sel de sodium en y ajoutant 100 cm³ d'une solution aqueuse de soude (NaOH = 3,2 g, soit 0,08 mole) ; ce sel de sodium est purifié par extractions successives avec de l'hexane, puis la solution aqueuse purifiée récupérée est traitée avec une solution de 12,66 g (0,045 mole) de ZnSO₄, 7H₂O dissous dans 30 cm³ d'eau ; le dialkyldithiophosphate de zinc sufuré précipite alors immédiatement.

On extrait le mélange avec du chloroforme,la phase organique récupérée est séchée sur Na₂SO₄ anhydre, puis le solvant est éliminé par évaporation sous pression réduite ; on recueille ainsi 20,3 g d'un liquide jaune visqueux qui répond à l'analyse élémentaire suivante :

| C % Masse | | H % Masse | | S % Masse | | P % Masse | | Zn % Masse | |
|---|---|---|---|---|---|---|---|---|---|
| Trouvé | Théorie | Trouvé | Théorie | Trouvé | Théorie | Trouvé | Théorie | Trouvé | Théorie |
| 40,11 | 39,81 | 7,26 | 7,11 | 30,69 | 30,40 | 7,24 | 7,35 | 7,82 | 7,75 |

Par ailleurs, les analyses RMN ¹³C, ³¹P et Infra-Rouge confirment la structure chimique attendue du sel de zinc, à savoir :

(((CH₃)₃ C-S-(CH₂)₃-O-)₂ P(S)-S)₂Zn

### EXEMPLE 3 : SYNTHESE D'UN ALCOOL DIALKYLDITHIOPHOSPHORIQUE MONOSULFURE

Une partie de l'acide dialkyldithiophosphorique soufré obtenu dans l'exemple 1 (60 g, soit 0,154 mole) est introduite dans un réacteur tricol de 250 cm³ ; puis on ajoute progressivement 10 g (0,172 mole) d'époxypropane en ne dépassant pas une température réactionnelle de 30°C. Après évaporation sous pression réduite de l'excès d'époxypropane, on récupère 66 g de liquide jaune pâle dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 45,75 | 45,51 | 8,57 | 8,26 | 29,12 | 28,61 | 6,92 | 6,92 |

Les analyses RMN ¹³C, ³¹P et Infra-Rouge confirment la structure chimique attendue, à savoir :

((CH₃)₃ C-S-(CH₂)₃-O-)₂ P(S)-S-CH₂-CH(CH₃)-OH

### EXEMPLE 4 : SYNTHESE D'UN DIALKYLDITHIOPHOSPHYLDITHIOPHOSPHATE DE ZINC MONOSULFURE

Dans un tricol de 250 cm³, muni d'un séparateur Dean-stark, on introduit 1,7 g (0,016 mole) de carbonate de sodium et 100 cm³ de benzène. Le mélange est porté au reflux pendant une heure pour rendre le milieu anhydre, puis on ajoute 3,66 g (0,0165 mole) de P₂S₅. On introduit ensuite progressivement 29,6 g (0,066 mole) d'alcool dialkyldithiophosphorique monosulfuré préparé dans l'exemple 3, puis on porte le mélange au reflux et on l'y maintient pendant 3 heures.

On refroidit ensuite à 50°C et on ajoute 20 cm³ d'alcool éthylique contenant 0,4 g (0,01 mole) d'hydroxyde de sodium ; on laisse réagir pendant une heure ; on filtre pour éliminer l'excès de P₂S₅ ; on ajoute 50 cm³ d'une solution aqueuse contenant 10 g de ZnSO₄, 7H₂O (0,0356 mole) et on laisse réagir 2 heures sous vigoureuse agitation;puis on sèche sur Na₂SO₄, on filtre et on évapore le benzène sous pression réduite. On récupère un liquide jaune pâle visqueux dont l'analyse élémentaire est la suivante :

| C % Masse | | H % Masse | | S % Masse | | P % Masse | | Zn % Masse | |
|---|---|---|---|---|---|---|---|---|---|
| Trouvé | Théorie | Trouvé | Théorie | Trouvé | Théorie | Trouvé | Théorie | Trouvé | Théorie |
| 40,01 | 39,91 | 7,27 | 7,04 | 30,89 | 31,36 | 8,95 | 9,10 | 3,06 | 3,20 |

Les analyses RMN ¹³C, ³¹P et Infra-Rouge confirment la structure chimique attendue à savoir :

((((CH₃)₃ C-S-(CH₂)₃-O-)₂ P(S)-S-CH₂-CH(CH₃)-O-)₂ P(S)-S-)₂Zn

### EXEMPLE 5 : SYNTHESE D'UN TRIESTER D'ACIDE DIALKYLDITHIOPHOSPHORIQUE MONOSULFURE

. Dans une première étape, on dissout 30 g (0,2 mole) d'alcool monosulfuré préparé dans l'exemple 1 dans 60 cm³ de chloroforme, puis on ajoute progressivement 11,9 g de SOCl₂ (0,1 mole) ; le mélange est ensuite porté au reflux ; on rajoute encore 11,94 g de SOCl₂ progressivement (0,1 mole), puis on maintient le reflux pendant deux heures supplémentaires.
   Après refroidissement, le chloroforme est éliminé par évaporation et le dérivé chloré correspondant à l'alcool monosulfuré est purifié par distillation sous pression réduite (PE = 92°C/1 mmbar) ; on obtient ainsi 31,5 g de produit (0,189 mole).
. Dans une seconde étape, on transforme 27,3 g (0,07 mole) d'acide dialkyldithiophosphorique monosulfuré préparé dans l'exemple 1 en sel de sodium de la façon indiquée dans l'exemple 2 ; la solution aqueuse de sel de sodium purifiée est ensuite mélangée avec 1 g d'hydrogénosulfate de tétrabutylammonium (catalyseur de transfert de phase) ; puis on ajoute 11,42 g (0,07 mole) du dérivé halogéné de la première étape précédente dissous dans 10 cm³ de dichlorométhane.

On porte le mélange au reflux pendant 10 heures ; on refroidit ; la phase organique récupérée est lavée à l'eau, séchée sur Na₂SO₄, filtrée puis évaporée sous pression réduite ; on recueille ainsi 35 g de produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 48,78 | 48,43 | 8,57 | 8,65 | 31,02 | 30,81 | 6,04 | 5,96 |

Les analyses RMN ¹³C, ³¹P et Infra-Rouge confirment la structure chimique attendue, à savoir :

((CH₃)₃ C-S-(CH₂)₃-O-)₂ P(S)-S-CH₂-CH(CH₃)-S-C-(CH₃)₃

### EXEMPLE 6 : SYNTHESE DE DIALKYLCHLOROPHOSPHATES MONOSULFURES

### Exemple 6.1 (Produit connu)

Dans un réacteur tricol de 500 cm³ on introduit 16 g (0,104 mole) de POCl₃ dissous dans 50 cm³ de benzène on ajoute ensuite progressivement une solution constituée de 30,8 g (0,208 mole) de l'alcool monosulfuré préparé dans l'exemple 1, de 16 g de pyridine et de 50 cm³ de benzène.

Le mélange obtenu est agité à la température ambiante pendant une heure ; le chlorure de pyridinium obtenu est éliminé par filtration ; la phase organique est ensuite lavée à l'eau, séchée sur Na₂SO₄ puis évaporée sous pression réduite ; on recueille ainsi 38 g de produit dont l'analyse élémentaire est la suivante :

| C % Masse | | H % Masse | | S % Masse | | P % Masse | | Cl % Masse | |
|---|---|---|---|---|---|---|---|---|---|
| Trouvé | Théorie | Trouvé | Théorie | Trouvé | Théorie | Trouvé | Théorie | Trouvé | Théorie |
| 44,89 | 44,61 | 8,02 | 7,97 | 17,44 | 17,03 | 8,11 | 8,23 | 9,65 | 9,43 |

Les analyses RMN ¹³C, ³¹P et Infra-Rouge confirment la structure chimique attendue :

((CH₃)₃ C-S-(CH₂)₃-O-)₂ P(O)-Cl

### Exemple 6.2 (Produit nouveau)

La même expérimentation réalisée à partir de l'alcool thiophosphoré monosulfuré préparé dans l'exemple 3 conduit à un produit correspondant à la formule suivante :

(((CH₃)₃C-S-(CH₂)₃-O-)₂ P(S)-S-CH₂-CH(CH₃)-O-)₂ P(O)-Cl

### EXEMPLE 7 : SYNTHESE DE DIALKYLPHOSPHATES DE ZINC MONOSULFURES

### Exemple 7.1 (Produit connu)

Dans une première étape, on agite vigoureusement 18 g (0,048 mole) du premier dialkylchlorophosphate monosulfuré obtenu à l'exemple 6 avec 50 cm³ d'une solution aqueuse de soude 2 N pendant 2 heures, puis on extrait le mélange au toluène.

La phase aqueuse récupérée est acidifiée avec de l'acide chlorhydrique 2 N ; elle est extraite au toluène, lavée à l'eau, séchée sur Na₂SO₄, filtrée puis évaporée sous pression réduite.

On récupère ainsi 15 g d'un liquide jaune dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 47,21 | 46,91 | 8,87 | 8,66 | 17,45 | 17,91 | 8,44 | 8,66 |

Les analyses ¹³C, ³¹P et Infra-Rouge confirment la structure chimique de l'acide dialkylphosphorique monosulfuré attendu, à savoir :

((CH₃)₃ C-S-(CH₂)₃-O-)₂ P(O)-OH

. Dans une seconde étape on neutralise 15 g (0,042 mole) d'acide dialkylphosphorique monosulfuré préparé dans la première étape précédente avec 2,35 g de potasse en solution dans 50 cm³ d'alcool méthylique. L'agitation est maintenue pendant 0,5 heure à la température ambiante, puis on ajoute 12,7 g (0,045 mole) de ZnSO₄, 7H₂O dissous dans 25 cm³ d'eau ; on agite le mélange pendant 0,5 heure à la température ambiante, puis on l'extrait à l'éther éthylique.

La phase organique récupérée est lavée à l'eau, séchée sur Na₂SO₄, filtrée puis évaporée sous pression réduite ; on recueille ainsi 15 g d'un liquide opalescent très visqueux dont l'analyse élémentaire est la suivante :

| C % Masse | | H % Masse | | S % Masse | | P % Masse | | Zn % Masse | |
|---|---|---|---|---|---|---|---|---|---|
| Trouvé | Théorie | Trouvé | Théorie | Trouvé | Théorie | Trouvé | Théorie | Trouvé | Théorie |
| 43,52 | 43,10 | 7,55 | 7,70 | 16,26 | 16,45 | 8,14 | 7,95 | 8,11 | 8,39 |

Les analyses RMN ¹³C, ³¹P, Infra-Rouge confirment la structure chimique attendue, à savoir :

((CH₃)₃ C-S-(CH₂)₃-O-)₂ P(O)-O-)₂Zn

### Exemple 7.2 (Produit nouveau)

La même expérimentation réalisée à partir du dérivé chloré de l'alcool thiophosphoré monosulfuré préparé dans l'exemple 3 (voir exemple 6.1) conduit à un produit correspondant à la formule suivante :

((((CH₃)₃ C-S-(CH₂)₃-O-)₂ P(S)-S-CH₂-CH(CH₃)-O-)₂ P(O)-O-)₂Zn

### EXEMPLE 8 : SYNTHESE DE TRIALKYLPHOSPHATES MONOSULFURES

### Exemple 8.1.

On dissout 10 g (0,065 mole) de POCl₃ dans 50 cm³ de benzène le mélange est refroidi à 5°C puis on ajoute progressivement une solution composée de 28,9 g (0,195 mole) de l'alcool monosulfuré préparé dans l'exemple 1, 30 g de pyridine et 50 cm³ de benzène, en maintenant la température réactionnelle à 5°C ; après l'addition, on garde cette température pendant encore 0,5 heure; on chauffe ensuite jusqu'au reflux du solvant et on laisse à ébullition pendant 2 heures. La solution est refroidie, filtrée ; la phase organique est lavée à l'eau, séchée sur Na₂SO₄, filtrée puis évaporée sous pression réduite ; on obtient ainsi 27 g de produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 51,87 | 51,62 | 9,54 | 9,22 | 19,22 | 19,70 | 6,11 | 6,35 |

Les analyses RMN ¹³C, ³¹P et Infra-Rouge confirment la structure chimique attendue, à savoir :

((CH₃)₃ C-S-(CH₂)₃-O-)₃ P(O)

### Exemple 8.2.

La même expérimentation réalisée à partir de l'alcool thiophosphoré monosulfuré préparé dans l'exemple 3 conduit à un produit correspondant à la formule suivante :

(((CH₃)₃ C-S-(CH₂)₃-O-)₂ P(S)-S-CH₂-CH(CH₃)-O-)₃P(O)

### EXEMPLE 9 : SYNTHESE DE TRIALKYLTHIOPHOSPHATES MONOSULFURES

### Exemple 9.1.

L'expérimentation de l'exemple 8.1. est reprise en substituant le POCl₃ par la même quantité molaire de PSCl₃ ; après réaction, puis traitements, on recueille 24 g de produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 50,12 | 49,97 | 9,01 | 8,92 | 25,12 | 25,43 | 6,11 | 6,15 |

Les analyses RMN ¹³C, ³¹P et Infra-Rouge confirment la structure chimique attendue, à savoir :

((CH₃)₃ C-S-(CH₂)₃-O-)₃ P(S)

### Exemple 9.2.

La même expérimentation réalisée à partir de l'alcool thiophosphoré monosulfuré préparé dans l'exemple 3 conduit à un produit correspondant à la formule suivante :

(((CH₃)₃ C-S-(CH₂)₃-O-)₂P(S)-S-CH₂-CH(CH₃)-O-)₃ P(S)

### EXEMPLE 10 : SYNTHESE DE DIALKYLPHOSPHONATES MONOSULFURES

### Exemple 10.1.

On dissout 30 g (0,18 mole) d'alcool monosulfuré préparé dans l'exemple 1 dans 100 cm³ de tétrachlorure de carbone ; puis, à la température ambiante, on ajoute progressivement 8,25 g (0,06 mole) de PCl₃ dissous dans 50 cm³ de tétrachlorure de carbone. On porte à ébullition et on garde la température pendant 1 heure ; le solvant est éliminé par évaporation sous pression réduite et le dialkylphosphonate est séparé du dérivé halogéné par chromatographie liquide sur une colonne de silice. On obtient 18 g de produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 49,32 | 49,08 | 9,21 | 9,06 | 18,62 | 18,74 | 8,95 | 9,06 |

Les analyses RMN ¹³C, ³¹P et Infra-Rouge confirment la structure chimique attendue, à savoir :

((CH₃)₃ C-S-(CH₂)₃-O-)₂ P(O)-H

### Exemple 10.2.

La même expérimentation, réalisée à partir de l'alcool thiophosphoré monosulfuré préparé dans l'exemple 3 conduit à un produit correspondant à la formule suivante :

(((CH₃)₃-C-S-(CH₂)₃-O-)₂ P(S)-S-CH₂-CH(CH₃)-O-)₂ P(O)-H

Ces expérimentations (ou synthèses) peuvent être reprises en utilisant des alcools polysulfurés (x>1) ; on peut de cette façon régler à volonté la quantité de soufre contenu dans les additifs de l'invention et obtenir de ce fait des produits dotés de propriétés antiusure et extrême-pression réglables.

Les exemples suivants sont destinés à illustrer ces possibilités.

### Exemple 11 : SYNTHESE D'UN ALCOOL POLYSULFURE

Dans un réacteur tricol de 500 cm³, on introduit 200 cm³ d'alcool méthylique puis 44 g (1,1 mole) d'hydroxyde de sodium. Après dissolution, on porte le mélange à 50°C et on ajoute progressivement 99 g (1,1 mole) de méthyl-2 propanethiol-2. A la fin de l'addition, on maintient la température à 50°C pendant encore 0,5 heure.

On ajoute ensuite progressivement 33,2 g (1,1 atome-gramme) de soufre élémentaire puis on laisse réagir à 50°C jusqu'à complète dissolution du soufre.

On introduit ensuite progressivement 92,5 g (1 mole) de n-chloropropanol ; le mélange est porté au reflux de l'alcool pendant 6 heures, puis il est refroidi à la température ambiante.

Le NaCl formé est éliminé par filtration, et la solution organique est évaporée sous pression réduite ; la phase organique est lavée à l'eau pour éliminer l'excès de polysulfure de sodium extraite au toluène , séchée sur Na₂SO₄ et évaporée sous pression réduite.

L'alcool polysulfuré brut obtenu est purifié par chromatographie liquide sur silice en éluant les impuretés (polysulfures de tert-butyle) à l'hexane, le produit souhaité étant ensuite récupéré par élution à l'alcool méthylique.

Après évaporation de l'alcool méthylique, on récupère ainsi 173 g d'alcool Tert-butylpolysulfuré dont l'analyse élémentaire est la suivante :

| C % Masse | | H % Masse | | S % Masse | |
|---|---|---|---|---|---|
| Trouvé | Théorie | Trouvé | Théorie | Trouvé | Théorie |
| 46,87 | 46,63 | 8,92 | 8,88 | 35,24 | 35,60 |

Les analyses RMN ¹³C, ³¹P et Infra-Rouge confirment la structure chimique attendue, à savoir un mélange statistique d'alcools sulfurés de formule globale suivante :

(CH₃)₃C-S₂-(CH₂)₃-OH

### EXEMPLE 12 : SYNTHESE D'UN ACIDE DIALKYLDITHIOPHOSPHORIQUE POLYSULFURE

On introduit dans un réacteur tricol de 1000 cm³ 150 g (0,83 mole) d'alcool polysulfuré préparé dans l'exemple 11 et 400 cm³ de chloroforme. On porte le mélange à 60°C, puis on ajoute progressivement 46,11 g (0,207 mole) de P₂S₅ ; après totale dissolution du P₂S₅, le mélange est conservé pendant une heure supplémentaire à 60°C sous agitation. Après avoir éliminé le chloroforme sous pression réduite, on recueille 185 g de liquide jaune clair dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 37,12 | 36,97 | 6,92 | 6,82 | 42,11 | 42,34 | 6,71 | 6,82 |

Les analyses RMN ¹³C, ³¹P et Infra-Rouge confirment la structure chimique attendue, à savoir :

((CH₃)₃ C-S₂-(CH₂)₃-O-)₂ P(S)-SH

### EXEMPLE 13 : SYNTHESE D'UN ALCOOL DIALKYLDITHIOPHOSPHORIQUE POLYSULFURE

100 g d'acide dialkyldithiophosphorique polysulfuré obtenu dans l'exemple 12 (0,22 mole) sont introduits dans un réacteur tricol de 500 cm³, puis on ajoute progressivement 15 g (0,26 mole) d'époxypropane en ne dépassant pas une température réactionnelle de 30°C. Après évaporation sous pression réduite de l'excès d'époxypropane, on récupère 112 g de liquide jaune pâle dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 39,94 | 39,81 | 7,35 | 7,22 | 37,32 | 37,55 | 6,01 | 6,05 |

Les analyses RMN ¹³C, ³¹P et Infra-Rouge confirment la structure chimique attendue de l'alcool, à savoir :

((CH₃)₃ C-S₂-(CH₂)₃-O-)₂ P(S)-S-CH₂-CH(CH₃)-OH

### EXEMPLE 14: SYNTHESE D'UN DIALKYLDITHIOPHOSPHATE DE ZINC POLYSULFURE

Les expérimentations des exemples 1 et 2 sont reprises avec l'alcool polysulfuré préparé dans l'exemple 11 ; après réactions et séparation, on obtient un dialkyldithiophosphate de zinc polysulfuré dont l'analyse élémentaire est la suivante :

| C % Masse | | H % Masse | | S % Masse | | P % Masse | | Zn % Masse | |
|---|---|---|---|---|---|---|---|---|---|
| Trouvé | Théorie | Trouvé | Théorie | Trouvé | Théorie | Trouvé | Théorie | Trouvé | Théorie |
| 34,82 | 34,56 | 6,37 | 6,17 | 39,21 | 39,58 | 6,14 | 6,38 | 6,46 | 6,73 |

Par ailleurs, les analyses RMN ¹³C, ³¹P et Infra-Rouge confirment la structure chimique attendue du produit, à savoir :

(((CH₃)₃C-S₂-(CH₂)₃-O-)₂ P(S)-S)₂Zn

### EXEMPLE 15 : SYNTHESE D'UN DIALKYLDITHIOPHOSPHYLE DITHIOPHOSPHATE DE ZINC POLYSULFURE

L'expérimentation de l'exemple 4 est reprise avec l'alcool dialkyldithiophosphorique polysulfuré préparé dans l'exemple 13 ; après réactions et séparation, on obtient un dialkyldithiophosphyldithiophosphate de zinc polysulfuré dont l'analyse élémentaire est la suivante :

| C % Masse | | H % Masse | | S % Masse | | P % Masse | | Zn % Masse | |
|---|---|---|---|---|---|---|---|---|---|
| Trouvé | Théorie | Trouvé | Théorie | Trouvé | Théorie | Trouvé | Théorie | Trouvé | Théorie |
| 35,58 | 35,46 | 6,46 | 6,26 | 38,67 | 39,01 | 7,95 | 8,08 | 2,64 | 2,84 |

Par ailleurs, les analyses RMN ¹³C, ³¹P et Infra-Rouge confirment la structure chimique du produit attendu, à savoir :

((((CH₃)₃ C-S₂-(CH₂)₃-O-)₂ P(S)-S-CH₂-CH(CH₃)-O-)₂ P(S)-S-)₂Zn

### EVALUATION DES PROPRIETES EXTREME-PRESSION ET ANTIUSURE DES ADDITIFS SELON L'INVENTION

On a réalisé des essais mettant en évidence les propriétés extrême-pression et antiusure des additifs de l'invention, dans des formulations lubrifiantes du type huiles d'engrenages.

Les additifs des exemples 2, 3, 4, 5, 8.1, 9.1, 10.1, 11, 14 et 15 ont été étudiés à l'aide d'une machine 4 billes selon la procédure de l'ASTM D 2783, à des concentrations telles que la teneur en soufre de l'huile de base minérale SAE 80W90 soit égale ou voisine de 0,2 % en poids ; les résultats obtenus sont rassemblés dans le tableau 1.

On constate en particulier que les additifs fonctionnels de l'invention possèdent de bonnes propriétés antiusure et extrême-pression, qui peuvent être modifiées en fonction de la quantité de soufre utilisée dans les synthèses. On constate de plus qu'à concentration de soufre égale les additifs du type polysulfure (ici x = 2) sont généralement plus performants que les additifs du type monosulfure (x = 1), d'où la possibilité de régler à volonté les performances mécaniques de ces produits selon la valeur choisie pour x (1, 2, 3, etc).

Cette amélioration peut être utilement mise à profit dans la formulation d'huiles lubrifiantes notamment pour engrenages.

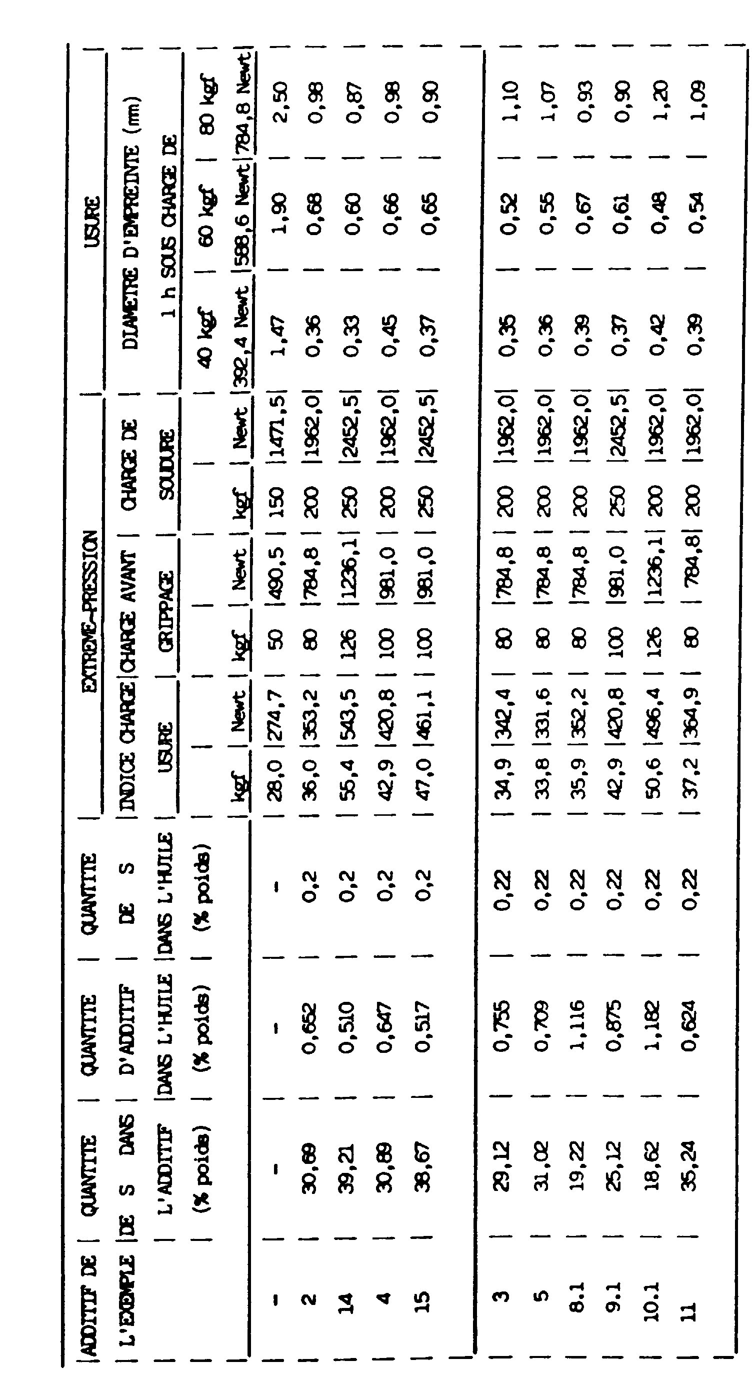

### EXEMPLE 16: Synthèse du composé

(((CH₃)₃ C-S-(CH₂)₃-O-)₂ P(S)-S-CH₂-CH₂-)₂S

a - Première étape, préparation de l'alcool monosoufré :

   (CH₃)₃ C-S-(CH₂)₃-OH

On introduit 150 cm³ d'alcool éthylique pur dans un réacteur tricol de 500 cm³, puis 18,6 g (0, 465 mole-g) d'hydroxyde de sodium. Après dissolution, on porte le mélange à 50°C et on ajoute progressivement 41,9 g (0,465 mole-g) de 2-méthyl-2 propanethiol. A la fin de l'addition, on maintient la température à 50°C pendant encore 0,5 heure puis on refroidit à 20°C.

On ajoute ensuite progressivement 43,95 g (0,465 mole-g) de n-chloropropanol, le mélange est ensuite porté au reflux de l'alcool pendant 6 heures puis il est refroidi à la température de l'ambiance.

Le Nacl formé est éliminé par filtration et la solution organique est acidifiée par une solution aqueuse d'HCl 2 N. On recueille la phase organique puis on extrait la phase aqueuse par du dichlorométhane. Les fractions organiques sont réunies, lavées à l'eau, séchées sur Na₂SO₄ anhydre et le dichlorométhane est éliminé par évaporation sous pression réduite.

La purification de l'alcool soufré est effectuée par distillation sous pression réduite (PE=84°C/l mbar) on récupère 68,5 g de produit incolore dont l'analyse élémentaire est la suivante :

| C % Masse | | H % Masse | | S % Masse | |
|---|---|---|---|---|---|
| trouvé | théorie | trouvé | théorie | trouvé | théorie |
| 56,81 | 56,73 | 10,79 | 10,81 | 21,84 | 21,66 |

Par ailleurs les analyses infra-rouge, RMN ¹³C et ¹H confirment la structure chimique du produit attendu.
b - Seconde étape, préparation d'un acide diakyldithiophosphorique monosulfuré :

   ((CH₃)₃ C-S-(CH₂)₃-O-)₂ P(S)-SH

Dans un réacteur de 250cm³ on introduit 19,0 g (0,128 mole-g) d'alcool monosulfuré préparé dans la première étape et 40 cm³ de chloroforme ; on porte le mélange à 60°C puis on ajoute progressi-7,11 g (0,032 mole-g) de P₂S₅. Après totale dissolution, le mélange est conservé une heure supplémentaire à 60°C sous agitation.

Après avoir éliminé le chloroforme sous pression réduite, on recueille 24 g de liquide jaune clair dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 43,21 | 43,05 | 7,97 | 7,94 | 32,71 | 32,86 | 8,02 | 7,94 |

Par ailleurs les analyses infra-rouge, RMN ¹³C et ¹H confirment la structure chimique du produit attendu.
c - Troisième étape, préparation d'un alcool diakyldithiphosphorique monosulfuré :

   ((CH₃)₃ C-S-(CH₂)₃-O-)₂ P(S)-S-CH₂-CH₂-OH

Dans un réacteur de 100 cm³ on introduit 22,0 g (0,0564 mole-g) d'acide dialkyldithiophosphorique soufré préparé dans l'étape précédente, puis on ajoute 2,8 g (0,064 mole-g) d'oxyde d'éthylène sous agitation et en refroidissant énergiquement pour conserver la température à 25°C. L'excès d'oxyde d'éthylène est éliminé par évaporation sous pression réduite et l'on recueille environ 24 g d'un liquide visqueux dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 44,09 | 44,22 | 8,12 | 8,06 | 29,32 | 29,53 | 7,03 | 7,14 |

Par ailleurs les analyses infra-rouge, RMN ¹³C, ³¹P et ¹H confirment la structure chimique du produit attendu.
d - Quatrième étape, préparation du chlorure correspondant à l'alcool dialkyldithiophosphorique monosulfuré précédent :

   ((CH₃)₃ C-S-(CH₂)₃-O-)₂ P(S)-S-CH₂-CH₂-Cl

Dans un réacteur de 100 cm³ on introduit 20,0 g (0,046 mole-g) d'alcool dialkyldithiophosphorique monosulfuré préparé dans l'étape précédente, on ajoute 20 g de chloroforme, puis très progressivement 2,74 g (0,023 mole-g) de SOCl₂ en conservant la température réactionnelle vers 20°C ; on porte ensuite le mélange à la température du reflux puis on ajoute de nouveau très progressivement la même quantité de SOCl₂. Après refroidissement le chloroforme est éliminé sous pression réduite pour recueillir environ 20 g de produit dont les analyses infra-rouge, RMN ¹³C, ¹H et ³¹P correspondent à la structure chimique du produit attendu.
e - Cinquième et dernière étape, préparation du composé visé :

   (((CH₃)₃ C-S-(CH₂)₃-O-)₂ P(S)-S-CH₂-CH₂-)₂S

Dans le réacteur de l'étape précédente on ajoute 20 g de chloroforme pour dissoudre le dérivé chloré, puis 1 g de chlorure de tétrabutylammonium (catalyseur de transfert de phase) et enfin très progressivement 20 cm³ d'une solution aqueuse contenant 7 g de Na₂S, 9h20 (0,03 mole-g) en maintenant la température vers 20°C. On porte ensuite le mélange à la température du reflux pendant une heure, on refroidit, on sépare les phases.

La fraction organique récupérée est lavée à l'eau, séchée sur NaSO₄ anhydre puis filtrée pour recueillir 19 g de produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 44,89 | 44,31 | 7,99 | 7,85 | 32,47 | 33,30 | 7,01 | 7,15 |

Par ailleurs les analyses infra-rouge, RMN ¹³C, ³¹P et ¹H confirment la structure chimique du produit attendu.

### EXEMPLE 17 : Synthèse du composé

(((CH₃)₃ C-S₂-(CH₂)₃-O-)₂ P(S)-S-CH₂-CH₂-)₂S

La première étape (a) de l'exemple 16 est reprise en ajoutant au milieu réactionnel 14,91 g (0,465 mole-g) de soufre élémentaire pour former statistiquement le composé disulfuré.

Après réaction, l'alcool disulfuré brut obtenu est purifiée par chromatographie liquide sur gel de silice, par élution à l'hexane pour éliminer les impuretés, et à l'alcool méthylique qui, après évaporation sous pression réduite, permet de récupérer l'alcool disulfuré purifié visé.

L'expérimantation est ensuite poursuivie, en utilisant les mêmes proportions molaires de réactifs, pour obtenir au terme de la cinquième étape (e) un produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 38,97 | 38,60 | 7,05 | 6,84 | 41,02 | 41,90 | 6,01 | 6,23 |

En outre les analyses infra-rouge, RMN ¹³C et ³¹P correspondent globalement à la structure chimique du produit statistique attendu.

### EXEMPLE 18 : Synthèse du composé

(((CH₃)₃C-S-(CH₂)₃-O-)₂-P(S)-S-CH₂-CH₂-)₂S₂

L'expérimentation de l'exemple 16 est reprise intégralement jusqu'à la cinquième étape dans laquelle on utilise 25 cm³ d'une solution aqueuse contenant 7 g de Na₂S, 9H₂O (0,03 mole-g) et 1 g de soufre élémentaire (0,03 atome-g) et pour former statistiquement le composé disulfuré.

On obtient ainsi un produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 43,22 | 42,73 | 7,85 | 7,57 | 34,89 | 35,68 | 6,73 | 6,90 |

En outre les analyses infra-rouge, RMN ¹³C, ¹H et ³¹P correspondent globalement à la structure chimique du produit statistique attendu.

### EXEMPLE 19 : Synthèse du composé

(((CH₃)₃ C-S₂-(CH₂)₃-O-)₂ P(S)-S-CH2-CH₂-)₂S₃

L'expérimentation de exemple 17 est reprise pour préparer l'alcool dialkylditiosphosphoré disulfuré soufré.

L'expérimentation est poursuivie, toutes proportions molaires entre réactifs conservées, jusqu'à la cinquième étape dans laquelle on utilise 25 cm³ d'une solution aqueuse constituée par 7 g de Na₂S, 9H₂O (0,03 mole-g) et 2 g de soufre élémentaire (0,06 atome-g) pour former le composé statistiquement trisulfuré visé.

On obtient ainsi un produit dont l'analyse élémentaire est la suivante :

| C % Masse | | H % Masse | | S % Masse | | P % Masse | |
|---|---|---|---|---|---|---|---|
| Trouvé | Théorie | Trouvé | Théorie | Trouvé | Théorie | Trouvé | Théorie |
| 36,86 | 36,26 | 6,78 | 6,42 | 44,71 | 45,42 | 5,34 | 5,85 |

En outre les analyses infra-rouge, RMN ¹³C, ¹H et ³¹P correspondent globalement à la structure chimique du produit statistique attendu.

### EVALUATION DES PROPRIETES EXTREME-PRESSION ET ANTIUSURE DES ADDITIFS DES EXEMPLES 16 à 19.

On a réalisé des essais mettant en évidence les propriétés extrême-pression et antiusure des additifs de l'invention, à l'aide d'une machine 4 billes selon la procédure de l'ASTM D 2783, à des concentrations telles que la teneur en soufre de l'huile minérale SAE 80W90 soit égale à 0,22 % en masse ; les résultats obtenus sont rassemblés dans le tableau 2.

On constate au vu des résultats que les additifs de l'invention possèdent de bonnes propriétés antiusure et extrême-pression, et que celles-ci peuvent être modifiées en fonction de la quantité de soufre élémentaire utilisée dans les synthèses. On constate en particulier, qu'à concentration de soufre égale, les composés comportant des motifs polysulfures sont plus efficaces que ceux comportant des motifs monosulfures, d'où la possibilité de régler à volonté les performances mécaniques de ces produits.

Cette amélioration peut être mise à profit dans la formulation d'huiles lubrifiantes pour engrenages ou pour le travail des métaux.

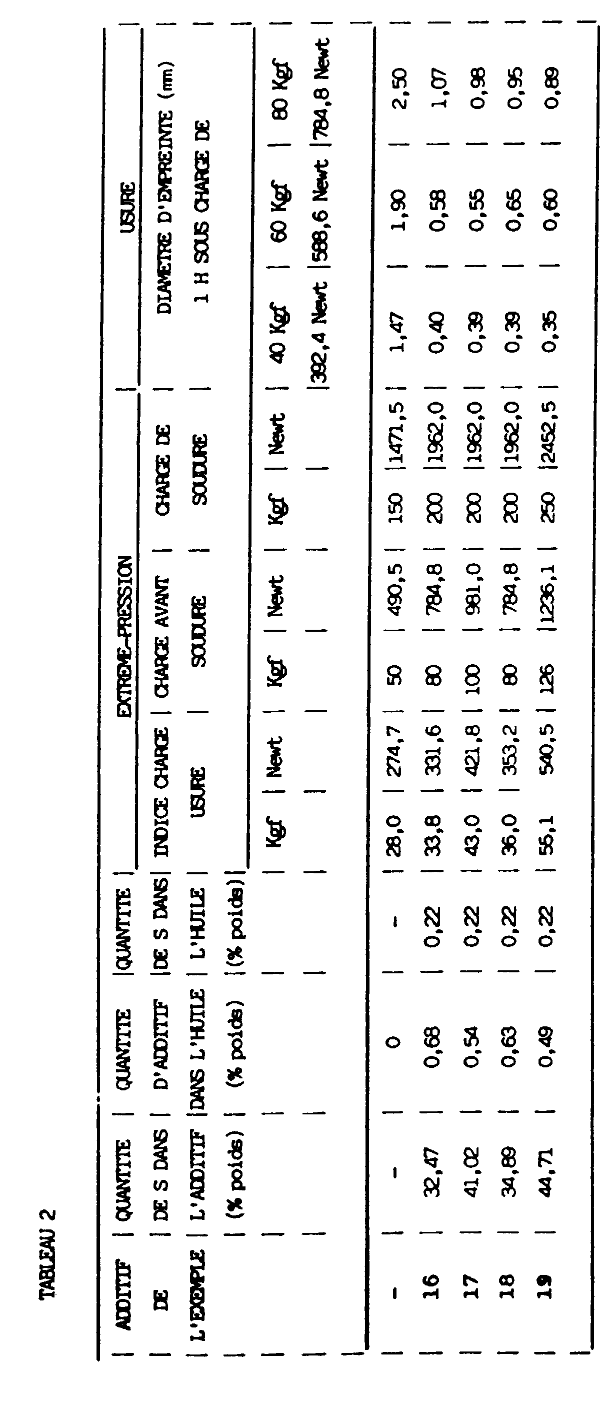

## Revendications

1. Composé phosphosoufré répondant à la formule générale (A)
(((R¹-Sₓ- (CH₂)ₙ-O)̵ₚ P(x)-Yₜ-)_{q}²ₘ
dans laquelle :
R¹ représente un groupement alkyle ou alkényle, fonctionnalisé ou non, renfermant de 1 à 30 atomes de carbone ;
- n est un nombre de 1 à 30 ;
X représente un atome d'oxygène ou un atome de soufre; Y représente un atome d'oxygène, un atome de soufre ou une chaîne hydrocarbonée oxygénée ou soufrée ;
Z représente un atome d'hydrogène, un atome de chlore, un métal, un dérivé oxygéné ou soufré du molybdène ou un groupement R⁶, alkyle ou alkényle, fonctionnalise ou non, renfermant de 1 à 30 atomes de carbone;
x est un nombre égal ou supérieur à 2;
p est égal à 2 ou 3 ;
t est égal à 0 ou 1;
m est égal à 0 où 1 ;
q est un nombre égal à la valence de Z si Z représente un métal ou un nombre égal à 1 ou 2.

2. Composé phosphosoufré selon la revendication 1 caractérisé en ce qu'il est choisi dans le groupe formé par :
. les acides dialkyldithiophosphoriques et dialkényldithiophosphoriques polysulfurés de formule générale :
R¹-Sₓ-(CH₂)ₙ-O-)₂ P(S)-SH
. les sels métalliques polysulfurés de formule générale :
((R¹-Sₓ-(CH₂)ₙ-O-)₂ P(S)-S-)_{q} Z
dans laquelle Z est un métal et q est un nombre égal à la valence de Z;
. les composés organiques polysulfurés de formule générale :
(R¹-Sₓ-(CH₂)ₙ-O-)₂ P(S)-S-R⁶
dans laquelle R⁶ est un groupement alkyle ou alkényle, fonctionnalisé ou non, renfermant de 1 à 30 atomes de carbone;
. les acides dialkylphosphoriques et dialkénylphosphoriques polysulfurés et les sels métalliques polysulfurés correspondants de formule générale :
((R¹-Sₓ-(CH₂)ₙ-O-)₂ P(O)-O-)_{q} Z
dans laquelle Z représente un atome d'hydrogène ou un métal et q est égal à 1 si Z représente un atome d'hydrogène ou égal à la valence de Z si Z est un métal;
. les dialkylchlorophosphates et dialkénylchlorophosphates polysulfurés de formule générale :
R¹-Sₓ-(CH₂)ₙ-O-)₂ P(O)-Cl
. les dialkylchlorothiophosphates et dialkénylchlorothiophosphates polysulfurés de formule générale :
R¹-Sₓ-(CH₂)ₙ-O-)₂ P(S)-Cl
. les trialkylphosphates et trialkénylphosphates polysulfurés de formule générale:
(R¹-Sₓ-(CH₂)ₙ-O-)₃ P(O)
. les trialkylthiophosphates et trialkénylthiophosphates polysulfurés de formule générale :
(R^{1,}Sₓ-(CH₂)ₙ-O-)₃ P(S);
et
. les dialkylphosphonates et dialkénylphosphonates polysulfurés de formule générale :
R¹-Sₓ-(CH₂)ₙ-O-)₂ P(O)-H

3. Composé selon la revendication 1 ou 2, caractérisé en ce que R1 représente un radical tertiobutyle ou méthallyle.

4. Composé selon la revendication 3, caractérisé en ce que x est égal à 2 et n égal à 3.

5. Composé selon la revendication 4, caractérisé en ce que R1 représente un radical tertiobutyle, R⁶ représente un radical tertiobutyle, Z représente un atome de zinc et q = 2.

6. Composé phosphosoufré caractérisé en ce qu'il consiste en un alcool (poly)sulfuré répondant à la formule générale (B) : 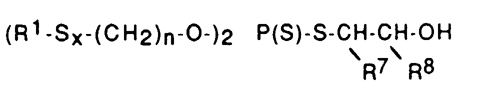 dans laquelle x est un nombre égal ou supérieur à 1; est un nombre de 1 à 30; R⁷ et R⁸, identiques ou différents, représentent chacun un atome d'hydrogène ou un radical substantiellement hydrocarboné monovalent de 1 à 30 atomes de carbone, R⁷ et R⁸ pouvant être reliés entre eux pour former une chaîne polyméthylénique.

7. Composé phosphosoufré caractérisé en ce qu'il répond à la formule générale (C) : 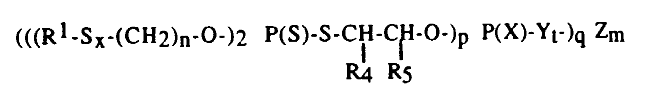 dans laquelle :
R¹ représente un groupement alkyle ou alkényle, fonctionnalisé ou non, renfermant de 1 à 30 atomes de carbone ;
n est un nombre de 1 à 30; R⁴ et R⁵, identiques ou différents, représentent chacun un atome d'hydrogène ou un radical substantiellement hydrocarboné monovalent de 1 à 30 atomes de carbone, R⁴ et R⁵ pouvant être reliés entre eux pour former une chaîne polyméthylénique ;
X représente un atome d'oxygène ou un atome de soufre; Y représente un atome d'oxygène, un atome de soufre ou une chaîne hydrocarbonée oxygénée ou soufrée; Z représente un atome d'hydrogène, un atome de chlore. un atome de soufre, une chaîne polysulfurée, un métal choisi par exemple dans le groupe formé par le sodium, le zinc, le cuivre, le molybdène, le plomb, l'antimoine et le cadmium, un dérivé oxygéné ou soufré du molybdène ou un groupement R⁶, alkyle ou alkényle, fonctionnalisé ou non, renfermant de 1 à 30 atomes de carbone ; x est un nombre égal ou supérieur à 1, de préférence égal à 1, 2 ou 3;
p est égal à 2 ou 3 ;
t est égal à 0 ou (si t=0, alors il n'y a pas de groupement Y dans la formule (C) ci-dessus;
m est égal à 0 ou 1 (si m=0, alors il n'y a pas de groupe Z dans la formule (C) ci-dessus;
q est un nombre égal à la valence de Z si Z est un métal ou un nombre égal à 1 ou 2.

8. Composé phosphosoufré selon la revendication 7, caractérisé en ce qu'il est choisi dans le groupe formé par :
. les acides dihydrocarbyldithiophosphyldithiophosphoriques (poly)sulfurés et les sels métalliques (poly)sulfurés correspondants de formule générale : 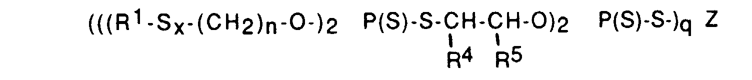 dans laquelle Z représente un atome d'hydrogène ou un métal et q est égal à 1 si Z représente un atome d'hydrogène ou égal à la valence de Z si Z est un métal;
. les composés organiques (poly)sulfurés de formule générale : 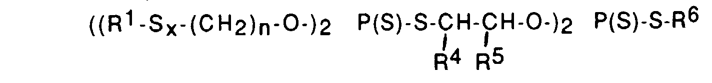 dans laquelle R⁶ est un groupement alkyle ou alkényle, fonctionnalisé ou non, renfermant de 1 à 30 atomes de carbone;
. les acides dihydrocarbyldithiophosphyldithiophosphoriques (poly)sulfurés et les sels métalliques (poly)sulfurés correspondants de formule générale : 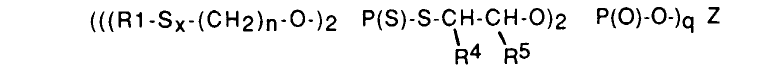 dans laquelle Z représente un atome d'hydrogène ou un métal q est égal à 1 si Z représente un atome d'hydrogène ou égal à la valence de Z si Z est un métal;
. les composés organiques (poly)sulfurés de formule générale : 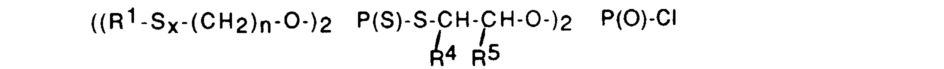
. les composés organiques (poly)sulfurés de formule générale : 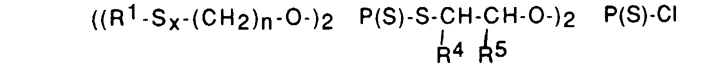
. les composés organiques (poly)sulfurés de formule générale : 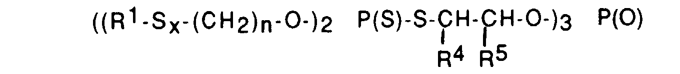
. les composés organiques (poly)sulfurés de formule générale : 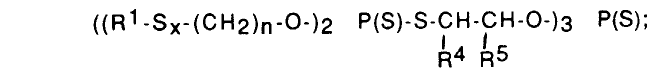
. les composés organiques (poly)sulfurés de formule générale :

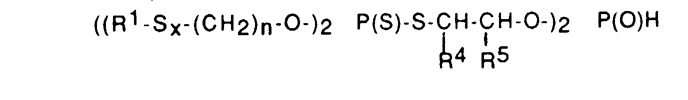

9. Composé selon la revendication 7 ou 8, caractérisé en ce que R¹ représente un radical tertiobutyle ou méthallyle.

10. Composé selon la revendication 9, caractérisé en ce que x est égal à 1 ou 2 et n est égal à 3.

11. Composé selon la revendication 10, caractérisé en ce que R¹ représente un radical tertiobutyle, R⁶ représente un radical tertiobutyle, R⁴ et R⁵ représentent chacun un atome d'hydrogène ou un radical méthyle, R⁷ et R⁸ représentent chacun un atome d'hydrogène ou un radical méthyle, Z représente un atome d'hydrogène, avec q = 1 ou un atome de zinc avec q = 2.

12. Composé phosphosoufré caractérisé en ce qu'il répond à la formule générale (D) 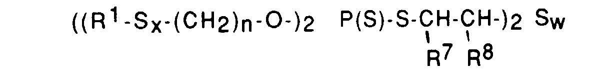 dans laquelle x est un nombre égal ou supérieur à 1, n est un nombre de 1 à 30, R⁷ et R⁸ identiques ou différents, représentent chacun un atome d'hydrogène ou un radical substantiellement hydrocarboné monovalent de 1 à 30 atomes de carbone, R⁷ et R⁸ pouvant être reliés entre eux pour former une chaîne polyméthylénique; et w est un nombre égal ou supérieur à 1.

13. Composé selon la revendication 12, caractérisé en ce que R¹ représente un radical méthyle, éthyle, tertiobutyle ou méthallyle.

14. Composé selon la revendication 13, caractérisé en ce que x est égal à 1 ou 2, n est égal à 3, R⁷ et R⁸ représentent chacun un atome d'hydrogène et w est égal à 1, 2 ou 3.

15. Utilisation d'un composé selon l'une des revendications 1 à 14, comme additif pour lubrifiant.

16. Un alcool polysulfuré de formule
R¹-Sₓ-(CH₂)ₙ-OH
où R1 représente un groupement alkyle ou alkényle, fonctionnalisé ou non, renfermant de 1 à 30 atomes de carbone; n est un nombre de 1 à 30; et x est un nombre égal ou supérieur à 2.

## Patentansprüche

1. Phosphorschwefelverbindung, entsprechend der allgemeinen Formel (A)
(((R¹-Sₓ-(CH₂)ₙ-O-)ₚ-P(X)-Yₜ-)_{q}Zₘ,
worin
R¹ eine funktionalisierte oder nicht funktionalisierte Alkyl- oder Alkenylgruppe darstellt, welche 1 bis 3 Kohlenstoffatome umfaßt,
n eine Zahl von 1 bis 30 ist,
X ein Sauerstoffatom oder ein Schwefelatom darstellt,
Y ein Sauerstoffatom, ein Schwefelatom oder eine sauerstoff- oder schwefelhaltige Kohlenwasserstoffkette ist,
Z ein Wasserstoffatom, ein Chloratom, ein Metall, ein sauerstoff- oder schwefelhaltiges Derivat von Molybdän oder eine funktionalisierte oder nicht funktionalisierte R⁶-, Alkyl- oder Alkenylgruppe ist, welche 1 bis 30 Kohlenstoffatome umfaßt,
x eine Zahl von gleich oder größer 2 ist,
p gleich 2 oder 3 ist,
t gleich 0 oder 1 ist,
m gleich 0 oder 1 ist,
q eine Zahl gleich der Wertigkeit von Z, wenn Z ein Metall ist, oder eine Zahl von gleich 1 oder 2 ist.

2. Phosphorschwefelverbindung nach Anspruch 1, dadurch gekennzeichnet, daß sie aus der Gruppe ausgewählt ist, die durch
. die Dialkyldithiophosphorsäuren und polysulfidischen Dialkenyldithiophosphorsäuren der allgemeinen Formel:
R¹-Sₓ-(CH₂)ₙ-O-)₂ P(S)-SH,
. die polysulfidischen Metallsalze der allgemeinen Fomel:
((R¹-Sₓ-(CH₂)ₙ-O-)₂ P(S)-S-)_{q} Z,
worin Z ein Metall ist und q eine Zahl gleich der Wertigkeit von Z ist,
. die polysulfidischen organischen Verbindungen der allgemeinen Formel:
(R¹-Sₓ-(CH₂)ₙ-O-)₂ P(S)-S-R⁶,
worin R⁶ eine funktionalisierte oder nicht funktionalisierte Alkyl- oder Alkenylgruppe ist, welche 1 bis 30 Kohlenstoffatome umfaßt,
. die Dialkylphosphorsäuren und polysulfidischen Dialkenylphosphorsäuren und die polysulfidischen Metallsalze, entsprechend der allgemeinen Formel:
((R¹-Sₓ-(CH₂)ₙ-O-)₂ P(O)-O-)_{q} z,
worin Z ein Wasserstoffatom oder ein Metall darstellt und q gleich 1 ist, wenn Z ein Wasserstoffatom ist oder gleich der Wertigkeit von Z ist, wenn Z ein Metall ist,
. die Dialkylchlorphosphate und polysulfidischen Dialkenylchlorphosphate der allgemeinen Formel:
R¹-Sₓ-(CH₂)ₙ-O-)₂ P(O)-Cl,
. die Dialkylchlorthiophosphate und polysulfidischen Dialkenylchlorthiophosphate der allgemeinen Formel:
R¹-Sₓ-(CH₂)ₙ-O-)₂ P(S)-Cl,
. die Trialkylphosphate und polysulfidische Trialkenylphosphate der allgemeinen Formel:
(R¹-Sₓ-(CH₂)ₙ-O-)₃ P(O),
. die Trialkylthiophosphate und polysulfidischen Trialkenylthiophosphate der allgemeine Formel:
(R¹-Sₓ-(CH₂)ₙ-O-)₃ P(S)
und
. die Dialkylphosphonate und polysulfidischen Dialkenyldiphosphonate der allgemeinen Formel:
R¹-Sₓ-(CH₂)ₙ-O-)₂ P(O)-H
gebildet ist.

3. Verbindung nach Anspruch 1 oder 2, dadurch gekennzeichnet, daß R¹ einen tert.-Butyl- oder Methallylrest darstellt.

4. Verbindung nach Anspruch 3, dadurch gekennzeichnet, daß x gleich 2 und n gleich 3 ist.

5. Verbindung nach Anspruch 4, dadurch gekennzeichnet, daß R¹ einen tert.-Butylrest, R⁶ einen tert.-Butylrest, Z ein Zinkatom darstellt und q gleich 2 ist.

6. Phosphorschwefelverbindung, dadurch gekennzeichnet, daß sie aus einem (poly)sulfidischen Alkohol besteht, welcher der allgemeinen Formel (B) entspricht: 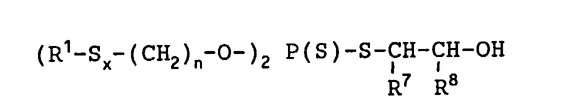 worin x eine Zahl von gleich oder größer 1 ist, n eine Zahl von 1 bis 30 ist, R⁷ und R⁸, welche gleich oder verschieden sein können, jeweils ein Wasserstoffatom oder einen im wesentlichen aus Kohlenwasserstoff bestehenden monovalenten Rest mit 1 bis 30 Kohlenstoffatomen darstellen, wobei R⁷ und R⁸ untereinander zur Bildung einer Polymethylenkette verbunden sein können.

7. Phosphorschwefelverbindung, dadurch gekennzeichnet, daß sie der allgemeinen Formel (C) entspricht: 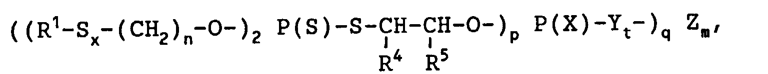 worin:
R¹ eine funktionalisierte oder nicht funktionalisierte Alkyl- oder Alkenylgruppe darstellt, welche 1 bis 3 Kohlenstoffatome umfaßt, n eine Zahl von 1 bis 30 ist, R⁴ und R⁵, welche gleich oder verschieden sein können, jeweils ein Wasserstoffatom oder einen im wesentlichen aus Kohlenwasserstoff bestehenden monovalenten Rest mit 1 bis 30 Kohlenstoffatomen darstellen, wobei R⁴ und R⁵ untereinander zur Bildung einer Polymethylenkette verbunden sein können,
X ein Sauerstoffatom oder ein Schwefelatom darstellt, Y ein Sauerstoffatom, ein Schwefelatom oder eine sauerstoffhaltige oder schwefelhaltige Kohlenwasserstoffkette darstellt, Z ein Wasserstoffatom, ein Chloratom, ein Schwefelatom, eine polysulfidische Kette, ein aus der durch Natrium, Zink, Kupfer, Molybdän, Blei, Antimon und Cadmium gebildeten Gruppe ausgewähltes Metall, ein sauerstoff- oder stickstoffhaltiges Derivat von Molybdän oder eine funktionalisierte oder nicht funktionalisierte R⁶-, Alkyl- oder Alkenylgruppe, welche 1 bis 30 Kohlenstoffatome umfaßt, ist,
x eine Zahl von gleich oder größer 1 ist,
p gleich 2 oder 3 ist,
t gleich oder 1 ist, (wenn t null ist, so gibt es keine Gruppe Y in der oben genannten Formel (C)) m gleich 0 oder 1 idt, (wenn m null ist, so gibt es keine Gruppe Z in der oben genanten Formel (C))
q eine Zahl gleich der Wertigkeit von Z, wenn Z ein Metall ist, oder eine Zahl von gleich 1 oder 2 ist.

8. Phosphorschwefelverbindung nach Anspruch 7, dadurch gekennzeichnet, daß sie aus der Gruppe ausgewählt ist, die durch:
. die (poly)sulfidischen Dihydrocarbyldithiophosphyldithiophosphorsäuren und die (poly)sulfidischen Metallsalze, entsprechend der allgemeinen Formel: 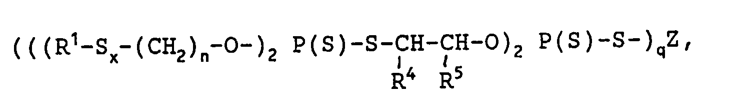 worin Z ein Wasserstoffatom oder ein Metall darstellt, q gleich 1 ist, wenn Z ein Wasserstoffatom darstellt oder gleich der Wertigkeit von Z ist, wenn Z ein Metall ist,
. die (poly)sulfidischen organischen Verbindungen der allgemeinen Formel: 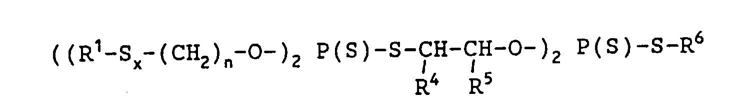 worin R⁶ eine funktionalisierte oder nicht funktionalisierte Alkyl- oder Alkenylgruppe ist, welche 1 bis 3 Kohlenstoffatome umfaßt,
. die (poly)sulfidischen Dihydrocarbyldithiophosphyldithiophorphorsäuren und die (poly)sulfidischen Metallsalze, entsprechend der allgemeinen Formel: 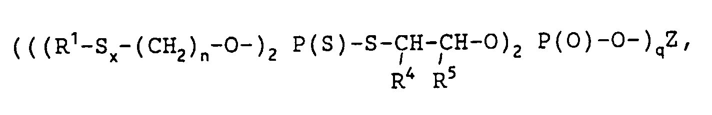 worin Z ein Wasserstoffatom oder ein Metall darstellt, q gleich 1 ist, wenn Z ein Wasserstoffatom ist oder gleich der Wertigkeit von Z ist, wenn Z ein Metall ist,
. die (poly)sulfidischen organischen Verbindungen der allgemeinen Formel: 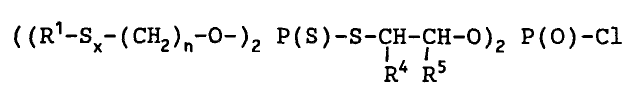
. die (poly)sulfidischen organischen Verbindungen der allgemeinen Formel: 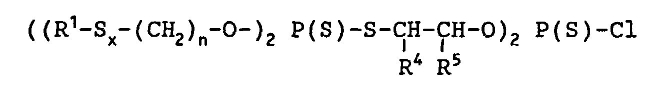
. die (poly)sulfidischen organischen Verbindungen der allgemeinen Formel: 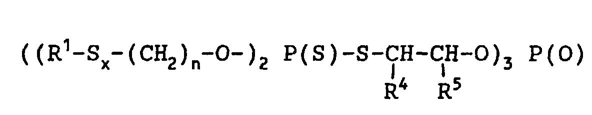
. die (poly)sulfidischen organischen Verbindungen der allgemeinen Formel: 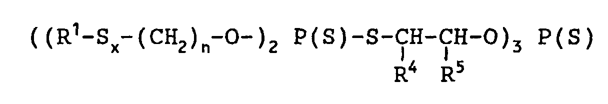 und
. die (poly)sulfidischen organischen Verbindungen der allgemeinen Formel: 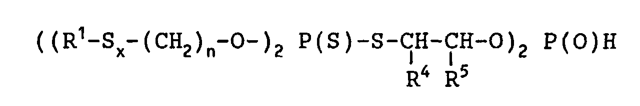 gebildet ist.

9. Verbindung nach Anspruch 7 oder 8, dadurch gekennzeichnet, daß R¹ einen tert.-Butyl- oder Methallylrest darstellt.

10. Verbindung nach Anspruch 9, dadurch gekennzeichnet, daß x gleich 1 oder 2 ist und n gleich 3 ist.

11. Verbindung nach Anspruch 10, dadurch gekennzeichnet, daß R¹ einen tert.-Butylrest darstellt, R⁶ einen tert.-Butylrest darstellt, R⁴ und R⁵ jeweils ein Wasserstoffatom oder einen Methylrest darstellen, R⁷ und R⁸ jeweils ein Wasserstoffatom oder einen Methylrest darstellen, Z ein Wasserstoffatom darstellt, wobei q gleich 1 ist oder ein Zinkatom, wobei q gleich 2 ist.

12. Phosphorschwefelverbindung, dadurch gekennzeichnet, daß sie der allgemeinen Formel (D) entspricht, 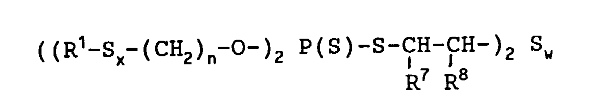 worin x eine Zahl von gleich oder größer 1 ist, n eine Zahl von 1 bis 30 ist, R⁷ und R⁸ die gleich oder verschieden sein können, jeweils ein Wasserstoffatom oder einen im wesentlichen aus Kohlenwasserstoff bestehenden monovalenten Rest mit 1 bis 30 Kohlenstoffatomen darstellen, wobei R⁷ und R⁸ untereinander zur Bildung einer Polymethylenkette verbunden sein können und w eine Zahl von gleich oder größer 1 ist.

13. Verbindung nach Anspruch 12, dadurch gekennzeichnet, daß R¹ einen Methyl-, Ethyl-, tert.-Butyl- oder Methallylrest darstellt.

14. Verbindung nach Anspruch 13, dadurch gekennzeichnet, daß x gleich 1 oder 2 ist, n gleich 3 ist, R⁷ und R⁸ jeweils ein Wasserstoffatom darstellen und w gleich 1, 2 oder 3 ist.

15. Verwendung einer Verbindung gemäß einem der Ansprüche 1 bis 14, als Additiv für Schmiermittel.

16. Polysulfidischer Alkohol der Formel
R¹-Sₓ-(CH₂)ₙ-OH,
worin R¹ eine funktionalisierte oder nicht funktionalisierte Alkyl- oder Alkenylgruppe darstellt, welche 1 bis 30 Kohlenstoffatome umfaßt, n eine Zahl von 1 bis 30 ist und x eine Zahl von gleich oder größer 2 ist.

## Claims

1. A phosphosulphur compound in accordance with the following general formula (A)
(((R¹-Sₓ(CH₂)ₙ-O-)ₚ P(X)-Yₜ-)_{q}Zₘ
in which R¹ represents a functionalized or non-functionalized alkyl or alkenyl group with 1 to 30 carbon atoms; n is a number from 1 to 30; X represents an oxygen atom or a sulphur atom; Y represents an oxygen atom, a sulphur atom or an oxygen or sulphur-containing hydrocarbon chain; Z represents a hydrogen atom, a chlorine atom, a metal, an oxygen or sulphur-containing derivative of molybdenum or a functionalized or non-functionalized alkyl or alkenyl R⁶ group containing 1 to 30 carbon atoms; x is a number equal to or greater than 2; p is equal to 2 or 3; t is equal to 0 or 1; m is equal to 0 or 1; q is a number equal to the valency of Z if Z represents a metal or a number equal to 1 or 2.

2. A phosphosulphur compound according to claim 1 characterized in that it is chosen from within the group formed by :
. polysulphurized dialkyldithiophosphoric and dialkenyldithiophosphoric acids of general formula :
(R¹ -Sₓ-(CH₂)-O-)₂ P(S) SH
. polysulphurized metal salts of general formula :
(R¹-Sₓ-(CH₂)ₙ-O-)₂ P(S)-S-)_{q} Z
in which Z is a metal and q is a number equal to the valency of Z;
. polysulphurized organic compounds of general formula :
(R¹-Sₓ-(CH₂)ₙ-O-)₂ P(S)-S-R⁶
in which R6 is a functionalized or non-functionalized alkyl or alkenyl group containing 1 to 30 carbon atoms;
. polysulphurized dialkylphosphoric and dialkenylphosphoric acids and the corresponding polysulphurized metal salts of general formula :
(R¹-Sₓ-(CH₂)ₙ-O-)₂ P(O)-O-)_{q} Z
in which Z represents a hydrogen atom or a metal and q is equal to 1 if Z represents a hydrogen atom or equal to the valency of Z if Z is a metal;
. polysulphurized dialkylchlorophosphates and dialkenylchlorophosphates of general formula
(R¹-Sₓ-(CH₂)ₙ-O-)₂ P(O)-Cl
. polysulphurized dialkylchlorothiophosphates and dialkenylchlorothiophosphates of general formula :
(R¹ -Sₓ-(CH₂)ₙ-O-)₂ P(O)-Cl
. polysulphurized trialkylthiophosphates and trialkenylthiophosphates of general formula :
(R¹-Sₓ-(CH₂)ₙ-O-)₃P(S);
and
. polysulphurized dialkylphosphonates and dialkenylphosphonates of general formula :
(R¹-Sₓ-(CH₂)ₙ-O-)₂ P(S)-Cl
. polysulphurized trialkylphosphates and trialkenylphosphates of general formula :
(R¹-Sₓ-(CH₂)ₙ-O-)₃ P(O)

3. A compound according to claim 1 or 2, characterized in that R¹ represents a tert.butyl or methallyl radical.

4. A compound according to claim 3, characterized in that x is equal to 2 and n equal to 3.

5. A compound according to claim 4, characterized in that R¹ represents a tert.butyl radical, R⁶ represents a tert.butyl radical, Z represents a zinc atom and q is 2.

6. A phosphosulphur compound characterized in that it is a (poly)sulphurized alcohol in accordance with the general formula (B) : 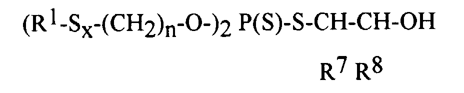 in which x is a number equal to or greater than 1; n is a number from 1 to 30; each of R⁷ and R⁸, which can be the same or different, represents a hydrogen atom or a substantially hydrocarbon monovalent radical with 1 to 30 carbon atoms and R⁷ and R⁸ can be interlinked to form a polymethylene chain.

7. A phosphosulphurized compound in accodance with the general formula (C) : 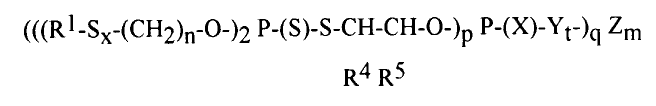 in which R¹ represents a functionalized or non-functionalized alkyl or alkenyl group with 1 to 30 carbon atoms; n is a number from 1 to 30, each of R⁴ and R⁵, which can be the same of different, represents a hydrogen atom or a substantially hydrocarbon-containing monovalent radical with 1 to 30 carbon atoms and R⁴ and R⁵ can be interlinked to form a polymethylene chain; X represents an oxygen atom or a sulphur atom; Y represents an oxygen atom, a sulphur atom or an oxygen or sulphur-containing hydrocarbon chain; Z represents a hydrogen atom, a chlorine atom, a sulphur atom, a polysulphide chain, a metal for example selected from the group consisting of sodium, zinc, copper, molybdenum, lead, antimony and cadmium, an oxygen or sulphur-containing derivative of molybdenum or a functionalized or non-functionalized alkyl or alkenyl R⁶ goup containing 1 to 30 carbon atoms; x is a number equal to or greater than 1 preferably equal to 1, 2 or 3; p is equal to 2 or 3; t is equal to 0 or 1 (if t = 0, then group Y does not exist in the above-mentioned formula (C)); m is equal to 0 or 1 (if m = 0, then group Z does not exist in the above-mentioned formula (C)); q is a number equal to the valencyof Zif Z represents a metal or a number equal to 1 or 2.

8. A phosphosulphur compound according to claim 7, characterized in that it is chosen from within the group formed by :
. (poly)sulphurized dihydrocarbyldithiophosphyldithiophosphoric acid and the corresponding (poly)sulphurized salts of general formula : 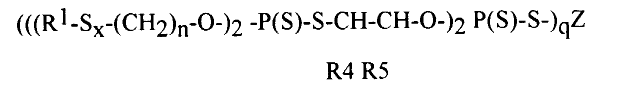 in which Z represents a hydrogen atom or a metal and q is equal to 1 if Z represents a hydrogen atom or equal to the valency ofZ if Z is a metal;
. (poly)sulphurized organic compounds of general formula : 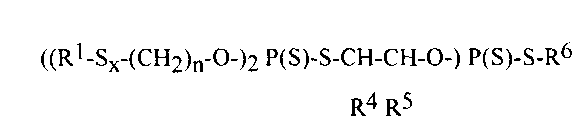 in which R⁶ is a functionalized or non-functionalized alkyl or alkenyl group containing 1 to 30 carbon atoms;
. (poly)sulphurized dihydrocarbyldithiophosphyl phosphoric acids and the corresponding (poly)sulphurized metal salts of general formula : 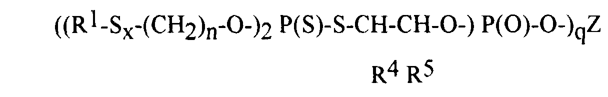 in which Z represents a hydrogen atom or a metal and q is equal to 1 if Z represents a hydrogen atom or equal to the valency of Z if Z is a metal;
. (poly)sulphurized organic compounds of general formula : 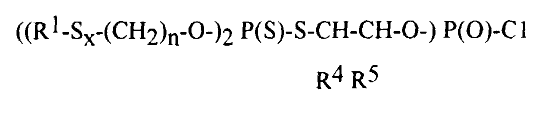
. (poly)sulphurized organic compounds of general formula : 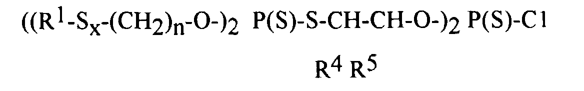
. (poly)sulphurized organic compounds of general formula : 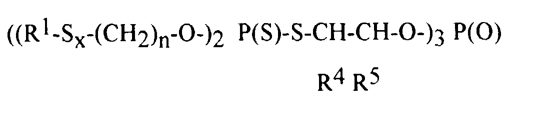
. (poly)sulphurized organic compounds of general formula : 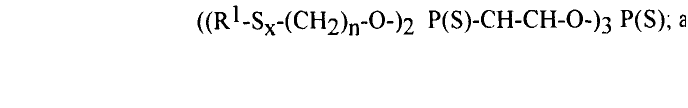 and 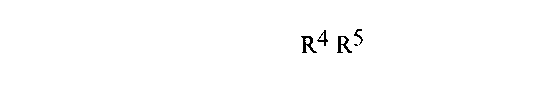
. (poly)sulphurized organic compounds of general formula :

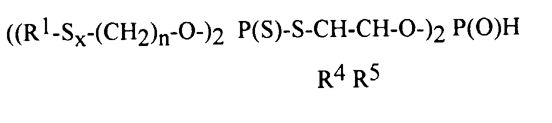

9. A compound according to claim 7 or 8, characterized in that R¹ represents a tert.butyl or a methallyl radical.

10. A compound according to claim 9, characterized in that x is equal to 1 or 2 and n is equal to 3.

11. A compound according to claim 10, characterized in that R¹ represents a tert.butyl radical, R⁶ is a tert.butyl radical, each of R⁴ and R⁵ represents a hydrogen atom or a methyl radical, each of R⁷ and R⁸ represents a hydrogen atom or a methyl radical, Z represents a hydrogen atom, with q = 1 or a zinc atom with q = 2.

12. A phosphosulphur compound characterized in that it is in accordance with the general formula (D) : 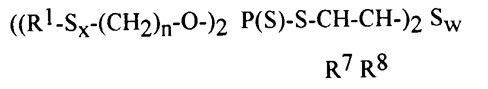 in which x is a number equal to or greater than 1, n is a number from 1 to 30, each of R⁷ and R⁸, which can be the same or different, represents a hydrogen atom or a substantially hydrocarbon monovalent radical with 1 to 30 carbon atoms, R⁷ and R⁸ can be interlinked to form a polymethylene chain and w is a number equal to or greater than 1.

13. A compound according to claim 9, characterized in that R¹ represents a methyl, ethyl, tert.butyl or methallyl radical.

14. A compound according to claim 13, characterized in that x is equal to I or 2, n is equal to 3, each of R⁷ and R⁸ represents a hydrogen atom and w is equal to 1, 2 or 3.

15. The use of a compound according to anyone of claims 1 to 14 as an additive for lubricants.

16. A polysulphurized alcohol of formula :
R¹ Sₓ-(CH₂)ₙ-OH
in which R¹ represents a functionalized or non-functionalized alkyl or alkenyl group with 1 to 30 carbon atoms; n is a number from 1 to 30; and x is a number equal to or greater than 2.
